# EUROPEAN PATENT APPLICATION

(11) **EP 4 597 963 A1**
(43) Date of publication of application: **06.08.2025**
(21) Application number: 25154673.5
(22) Date of filing: 29.01.2025
(51) Int. Cl.: H04L 41/0631, H04L 41/0677, H04L 41/5009, H04L 43/20

(54) **SOFTWARE DEFINED WIDE AREA NETWORK MANAGEMENT WITHIN APPLICATION PROGRAMMING INTERFACE RATE LIMITS**

(30) Priority: 31.01.2024 US 202418428848
(71) Applicant: CA, Inc., San Jose, CA 95131 (US)
(72) Inventor: Mortha, Srinivas, San Jose, CA, 95131 (US); Chevendra, Naga Naveen, San Jose, CA, 95131 (US); Kakani, Balram Reddy, San Jose, CA, 95131 (US)
(74) Representative: Grünecker Patent- und Rechtsanwälte PartG mbB

(57) **Abstract**

The technical solutions can provide a timely and consistent monitoring of SD-WAN by combining network topology data acquired via API calls with SD-WAN performance data gathered from one or more network communication protocols. A solution can include a system, having one or more processors coupled with memory to receive, responsive to BFD monitoring, BFD session data in a first format. The BFD session data can correspond to a tunnel between devices of a SD-WAN. The one or more processors can receive, responsive to IPFIX monitoring, flow metrics in a second format, the flow metrics corresponding to one or more flows of a network traffic traversing the tunnel. The one or more processors can aggregate the BFD session data and the flow metrics into aggregated metrics according to a third format and determine an action to take based at least on the aggregated metrics in the third format.

## Description

### TECHNICAL FIELD

This disclosure generally relates to systems and methods for management of communication networks, including, without limitation, management of software defined wide area networks (SD-WANs).

### BACKGROUND

Communication devices can exchange data over networks that can be deployed using a variety of platforms and communication protocols. Software-Defined Wide Area Networks (SD-WANs) have become increasingly used in modern networks due to their ability to facilitate networking over various technologies. Application programming interface (API) calls can be used to gather information on a variety of network elements of SD-WANs utilizing different hardware and software infrastructure.

### SUMMARY

The technical solutions this disclosure facilitates timely and consistent monitoring of SD-WAN state and performance by combining the network topology data gathered using a limited number of API calls with SD-WAN performance data gathered from a variety of protocols. The topology and performance data can be converted into a common format and combined into a graph data model of the SD-WAN to facilitate an effective and timely issue identification and resolution while remaining within the network-defined SD-WAN API rate limits. The expanding adoption of SD-WANs, combining technologies such as multiprotocol label switching (MPLS), broadband, and long term evolution (LTE) technology, has led to a surge in overlay communication tunnels for routing application traffic across various network sites. Network operations (NetOps) of SD-WANs face challenges as they use many API calls to SD-WAN vendor management appliances to inquire on ongoing network performance issues. In large-scale SD-WANs, Network Management Systems (NMS) monitoring and improving the performance of the SD-WANs, can find it challenging use API calls to timely and consistently identify occurrence of various network issues, while remaining below the imposed API rate limits. As a result, the quality of NMSs services can be hindered as the NMS may be precluded from timely and consistently identifying SD-WAN performance issues using API calls.

To overcome these challenges, the technical solutions provide an NMS with a metric aggregator that can monitor and address SD-WAN issues using a reduced number of API calls to create a model of an SD-WAN network topology, while using network protocols, such as Bidirectional Forwarding Detection (BFD) and Internet Protocol Flow Information Export (IPFIX), for timely (e.g., real time) monitoring of faults, issues, performance or changes on the SD-WAN. In doing so, the external NMS of the technical solutions can generate a graph data model representing SD-WAN elements, such as routers, interfaces, tunnels, Service Level Agreement (SLA) classes, and Traffic Locators (TLOCs), thereby facilitating timely issue identification. By aggregating data from various sources and of various formats into an SD-WAN model of a unified format, the technical solutions can facilitate a real-time and uniform network monitoring of both overlay and underlay features of the SD-WAN, allowing for providing of timely alerts and notifications on the ongoing issues thereby improving the troubleshooting and maintenance effectiveness, while also remaining below the SD-WAN API rate limits.

An aspect of the technical solutions is directed to a system having one or more processors coupled with memory to. The one or more processors can receive a network fault data, such as BFD session data in a first format, responsive to monitoring a first network protocol data configured to indicate a failure of a communication link, such as a bidirectional forwarding detection (BFD) protocol data. The network fault data, such as a BFD session data, can correspond to a tunnel between devices of a software defined wide area network (SD-WAN). The one or more processors can receive flow metrics in a second format, responsive to monitoring a second network protocol data configured to indicate metrics of flow of network traffic, such as internet protocol flow information export (IPFIX) data. The flow metrics can correspond to one or more flows of a network traffic traversing the tunnel. The one or more processors can aggregate the BFD session data and the flow metrics into aggregated metrics according to a third format. The one or more processors can determine an action to take based at least on the aggregated metrics in the third format.

The one or more processors can identify a timer for polling the BFD session data and the flow metrics. The one or more processors can receive the BFD session data and the flow metrics responsive to one or more requests transmitted according to the timer. The one or more processors can identify an API rate limit for API calls to the SD-WAN. The one or more processors can receive data on topology of the SD-WAN responsive to a plurality of API calls within the API rate limit. The one or more processors can aggregate the BFD session data and the flow metrics for the topology of the SD-WAN.

The one or more processors can receive the BFD session data identifying a fault of the tunnel and determine that a count of API calls to a controller of the SD-WAN within a time period is below an API limit for the time period. The one or more processors can send, responsive to the fault and the determination, an API call to the controller of the SD-WAN, the call requesting information on the tunnel.

The one or more processors can aggregate the BFD session data and the flow metrics according to a graph data model of the SD-WAN. The graph data model can include vertices arranged according to a topology of the SD-WAN and edges corresponding to relations between the vertices according to the third format. The flow metrics can include data on at least one of: jitter, latency, transmission rate, receiving rate, loss and delay and the action includes a transmission of at least one of an alarm or a notification indicative of a fault of the tunnel identified by a model of the SD-WAN based at least on the aggregated metrics.

The one or more processors can determine, based at least on the BFD session data, a state of the tunnel. The one or more processors can identify, based at least on the state of the tunnel, that a performance of the tunnel is below a threshold of a service level agreement (SLA). The one or more processors can transmit, according to the action to indicate an SLA violation, an alert indicative of the performance of the tunnel.

The one or more processors can determine, using a graph data model of the aggregated metrics, a performance of an application of a device of the SD-WAN, the application communicating the network traffic via the tunnel. The one or more processors can detect, based at least on the performance, a fault corresponding to the application. The one or more processors can determine the action to transmit an alert indicative of the fault corresponding to the application.

An aspect of the technical solutions is directed to a method. The method can include one or more processors coupled with memory receiving network fault data, such as BFD session data in a first format, responsive to monitoring a first network protocol data configured to indicate a failure of a communication link, such as bidirectional forwarding detection (BFD) protocol data. The network fault data, such as BFD session data, can correspond to a tunnel between devices of a software defined wide area network (SD-WAN). The method can include the one or more processors receiving flow metrics in a second format, responsive to monitoring a second network protocol data configured to indicate metrics of flow of network traffic, such as internet protocol flow information export (IPFIX) protocol data. The flow metrics can correspond to one or more flows of a network traffic traversing the tunnel. The method can include aggregating, by the one or more processors, the BFD session data and the flow metrics into aggregated metrics according to a third format. The method can include the one or more processors determining an action to take based at least on the aggregated metrics in the third format.

The method can include the one or more processors identifying a timer for polling the BFD session data and the flow metrics. The method can include receiving, by the one or more processors, the BFD session data and the flow metrics responsive to one or more requests transmitted according to the timer. The method can include identifying, by the one or more processors, an API rate limit for API calls to the SD-WAN. The method can include receiving, by the one or more processors, data on topology of the SD-WAN responsive to a plurality of API calls within the API rate limit. The method can include aggregating, by the one or more processors, the BFD session data and the flow metrics for the topology of the SD-WAN.

The method can include receiving, by the one or more processors, the BFD session data identifying a fault of the tunnel. The method can include determining, by the one or more processors, that a count of API calls to a controller of the SD-WAN within a time period is below an API limit for the time period. The method can include sending, by the one or more processors, responsive to the fault and the determination, an API call to the controller of the SD-WAN, the call requesting information on the tunnel.

The method can include aggregating, by the one or more processors, the BFD session data and the flow metrics according to a graph data model of the SD-WAN. The graph data model can include vertices arranged according to a topology of the SD-WAN and edges corresponding to relations between the vertices according to the third format. The flow metrics can include data on at least one of: jitter, latency, transmission rate, receiving rate, loss and delay and the action includes a transmission of at least one of an alarm or a notification indicative of a fault of the tunnel identified by a model of the SD-WAN based at least on the aggregated metrics.

The method can include determining, by the one or more processors, based at least on the BFD session data, a state of the tunnel. The method can include identifying, by the one or more processors, based at least on the state of the tunnel, that a performance of the tunnel is below a threshold of a service level agreement (SLA). The method can include transmitting, by the one or more processors, according to the action to indicate an SLA violation, an alert indicative of the performance of the tunnel.

The method can include determining, by the one or more processors, using a graph data model of the aggregated metrics, a performance of an application of a device of the SD-WAN, the application communicating the network traffic via the tunnel. The method can include detecting, by the one or more processors, based at least on the performance, a fault corresponding to the application. The method can include determining, by the one or more processors, the action to transmit an alert indicative of the fault corresponding to the application.

An aspect of the technical solutions is directed to a non-transitory computer-readable medium storing instructions. The instructions, when executed by at least one processor, can cause the at least one processor to receive, responsive to bidirectional forwarding detection (BFD) monitoring, BFD session data in a first format. The BFD session data can correspond to a tunnel between devices of a software defined wide area network (SD-WAN). The instructions, when executed by at least one processor, can cause the at least one processor to receive, responsive to internet protocol flow information export (IPFIX) monitoring, flow metrics in a second format, the flow metrics corresponding to one or more flows of a network traffic traversing the tunnel. The instructions, when executed by at least one processor, can cause the at least one processor to aggregate the BFD session data and the flow metrics into aggregated metrics according to a third format. The instructions, when executed by at least one processor, can cause the at least one processor to determine an action to take based at least on the aggregated metrics in the third format.

The instructions, when executed by at least one processor, can cause the at least one processor to identify a timer for polling the BFD session data and the flow metrics. The instructions, when executed by at least one processor, can cause the at least one processor to receive the BFD session data and the flow metrics responsive to one or more requests transmitted according to the timer. The instructions, when executed by at least one processor, can cause the at least one processor to identify an API rate limit for API calls to the SD-WAN.

The instructions, when executed by at least one processor, can cause the at least one processor to receive data on topology of the SD-WAN responsive to a plurality of API calls within the API rate limit. The instructions, when executed by at least one processor, can cause the at least one processor to aggregate the BFD session data and the flow metrics for the topology of the SD-WAN.

The instructions, when executed by at least one processor, can cause the at least one processor to receive the BFD session data identifying a fault of the tunnel. The instructions, when executed by at least one processor, can cause the at least one processor to determine that a count of API calls to a controller of the SD-WAN within a time period is below an API limit for the time period. The instructions, when executed by at least one processor, can cause the at least one processor to send, responsive to the fault and the determination, an API call to the controller of the SD-WAN, the call requesting information on the tunnel.

### BRIEF DESCRIPTION OF THE DRAWINGS

These and other aspects and features of the present embodiments will become apparent to those ordinarily skilled in the art upon review of the following description of specific embodiments in conjunction with the accompanying figures.
FIG. 1 is an example block diagram of a system for SD-WAN management within API rate limits utilizing network protocol data.
FIG. 2 is a block diagram illustrating an architecture for a computer system that can be employed to implement elements of the systems and methods described and illustrated herein.
FIG. 3 illustrates an example flow diagram of a method for SD-WAN management within API rate limits utilizing network protocol data.
FIG. 4 illustrates an example of a table of BFD session data that can be received and used by the metrics aggregator for monitoring and management of SD-WAN.
FIG. 5 illustrates an example of a table of an application route statistics of a network device that can be provided through BFD session data or flow data.
FIG. 6 illustrates an example of a flow metrics data.
FIG. 7 illustrates an example of a screen shot of a graphical user interface showing metric aggregator data.
FIG. 8 illustrates an example flow of a method for SD-WAN management within API rate limits utilizing network protocol data.
FIG. 9 illustrates an example of a diagram of an SD-WAN infrastructure and a representation of an SD-WAN model representing the infrastructure using vertices and edges.

### DETAILED DESCRIPTION

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting; rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

As Software-Defined Wide Area Networks (SD-WANs) increase in popularity, various service providers using different technologies, such as multiprotocol label switching (MPLS), Broadband, and LTE, provide an increasingly large number of overlay communication tunnels for routing application traffic across various geographical locations and network sites. With such increasingly complex SD-WANs, SD-WAN API collectors for gathering data for network operations (NetOps) can face challenges as they make increasing number of API calls to SD-WAN vendor management appliances to receive update information on the SD-WAN. In large-scale networks with numerous tunnels, network management systems (NMS) that monitor and address issues on SD-WANs can be subject to API call rate limitations restricting their ability to make more than a particular number of API requests over a given time period, making it difficult to continuously update performance and fault information on the state of the SD-WANs, its devices and tunnels. As a result, NMSs can find it challenging to timely and consistently detect and address ongoing network issues using their SDK/APIs. This in turn makes API integrations difficult to scale to larger SD-WANs that have many more endpoints and tunnels to monitor, thereby hindering the ability of these systems to timely resolve network issues, including identifying application performance problems, correlating overlay faults with underlay performance problems, and minimizing delays in topological and performance updates during WAN changes.

The technical solutions of the present disclosure overcome these challenges by providing an NMS with a metric aggregator and an SD-WAN model that uses APIs to collect SD-WAN topology, while leveraging data from different network protocols (e.g., BFD and IPFIX) to consistently and timely update the SD-WAN fault data and performance metrics. In doing so, the metric aggregator facilitates creation of an up-to-date model of the SD-WAN elements (e.g., routers, interfaces, tunnels, SLA classes and TLOCs) represented as modeled vertices and the relations between such elements represented as edges of the network. In doing so, the metric aggregator provides an updated state of the overlay and underlay features of the SDWAN, allowing for a timely identification and addressing of network issues. The underlay features can include devices in the physical layer of the network, such as routers, switches, physical network links (e.g., MPLS) routers, broadband connections and other hardware responsible for data communication. The overlay features can include the virtual network infrastructure operating on top of the physical underlay, such as VPN gateways, SD-WAN edge devices and controllers.

As the technical solutions combine the data on SD-WAN elements and their performance metrics from diverse sources, the metric aggregator can convert the data of the various overlay and underlay devices, from the various formats or protocols, into a single format that allows for a real-time and uniform monitoring of the network. As a result, the technical solutions provide consistent, detailed and timely SD-WAN monitoring alerts for users, facilitating more effective troubleshooting and network maintenance, while operating below SD-WAN API rate limits.

The NMS can monitor SD-WANs using different network operations (NetOps), such as a SD-WAN API collector (e.g., 152) to receive network data from various protocols and formats. As SD-WANs can include a variety of elements such as branch routers, interfaces, internet service providers (ISPs), tunnels, service level agreement paths (SLA-paths), and policies, in order to monitor these network elements, SD-WAN API collector can fetch inventory and performance metrics from the SD-WAN Management station through API calls. The SD-WAN API collector can also regularly poll SD-WAN Management APIs to obtain inventory and performance data, facilitating the identification and resolution of faults and performance issues in the SD-WAN network.

Regulating external API requests and prevent overburdening of the SD-WAN, SDWAN management tools often impose rate limits on API calls from external sources to balance the need for performance monitoring with the system's capacity. SD-WAN management tools can convey events and faults raised by the SD-WAN network to registered endpoints like NMS. However, data consistency and formatting across a variety of network tools and network elements (e.g., devices, routers, interfaces and tunnels) can be challenging and the provided information may not suffice for end-to-end SD-WAN network monitoring.

The technical solutions of this disclosure can extend monitoring capabilities of an NMS using an aggregator to gather, combine and process metrics from multiple protocols of the data plane of the SD-WAN. As SDWAN networks increase in size (e.g., number of elements) and the complexity (e.g., with diverse service providers, policies, and WAN edges), the number of overlay tunnels to be monitored by the NMS can continue to increase. To timely and consistently monitor this many tunnels using APIs, the number of API calls can reach or exceed the API rate limits preventing any further API calls to the network for a period of time. In such instances, NMSs may be prevented from identifying errors on the network, managing alarms and providing timely performance updates. The technical solutions overcome this challenge by aggregating data from both the management and data planes from multiple protocols or formats, into a single-format model of the SD-WAN, thereby timely updating the model of the SD-WAN without exceeding API rate limits.

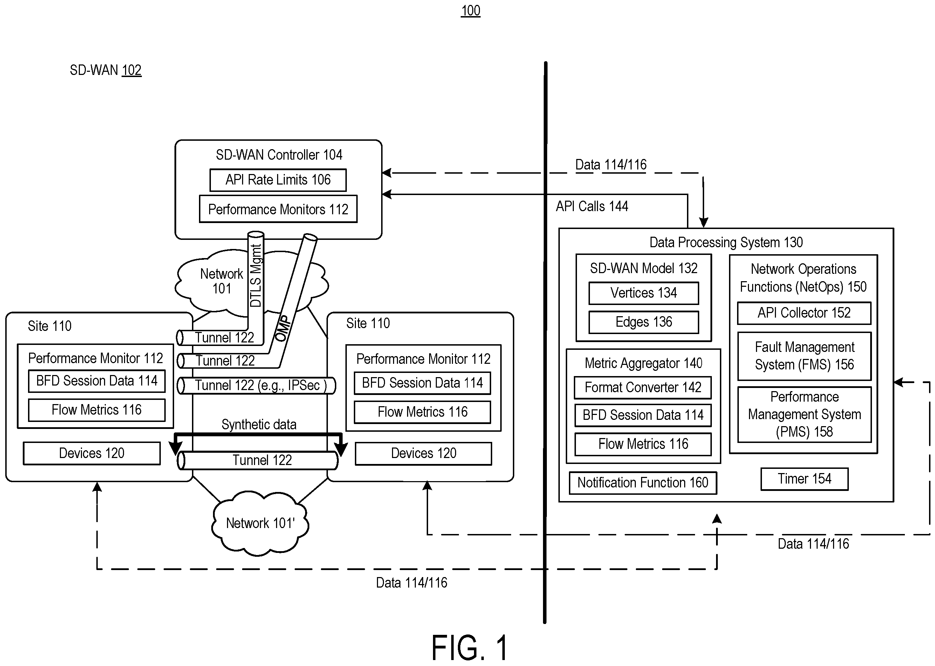

FIG. 1 illustrates a system 100 for SD-WAN management within API rate limits. System 100 can combine SD-WAN topology data gathered with a limited number of API calls with network data protocols of different formats into a SD-WAN model of a common format for timely (e.g., real time) and consistent monitoring of SD-WAN operation and performance. System 100 can include an SD-WAN 102 having multiple sites 110. Each site 110 can include one or more devices 120 (e.g., routers, switches, virtual machines, gateways or servers) and one or more performance monitors 112 monitoring BFD session data 114 and flow metrics. SD-WAN 102 can include tunnels 122 communicatively coupling or connecting each of the sites 110 (e.g., devices 120 across the sites 110). Tunnels 122 can be used for transmitting a variety of network data across a variety of networks 101 (e.g., 101 or 101'), including network communications with network traffic of various formats and protocols, such as the BFD or IPFIX formats.

Across the network 101 (e.g., 101 or 101'), system 100 can include one or more data processing systems (DPSs) 130. Each DPS 130 can include one or more computing devices (e.g., processors, memories and computer programming codes) for monitoring, modeling, analyzing, troubleshooting or maintaining SD-WAN 102. DPS 130 can include an SD-WAN model 132 having vertices 134 representing various elements of the SD-WAN 102 (e.g., devices 120, tunnels 122, interfaces, policies, rules or any other elements) and edges 136 representing relationships and performance between the SD-WAN elements. DPS 130 can include a metric aggregator 140 that can convert formats of BFD session data 114 and flow metrics 116 using format converter 142 into its own common format allowing monitoring of SD-WAN using network data from a variety of protocols and formats. DPS 130 can include a timer 154 for timing API calls 144 and other network traffic (e.g., BFD session data 114 and flow metrics 116) exchanged with SD-WAN 102. DPS 130 can include network operations functions (NetOps) 150, API collector 152 for managing API calls 144 and notification function 160 for generating and providing notifications on the issues or state of the SD-WAN 102. NetOps 150 can include one or more API collectors 152 for issuing and receiving API calls about the SD-WAN, one or more fault management systems (FMSs) 156 for managing detected network faults and one or more performance management systems (PMSs) 158 for managing performance of the SD-WAN 102.

Software-Defined Wide Area Networks 102, also referred to as SD-WANs 102, can include any network architectures that uses software-based controllers or application programming interfaces (APIs) to efficiently manage the distribution of network traffic across a wide geographical area. SD-WAN 102 can include endpoints or nodes communicating via tunnels 122 formed across one or more networks 101 to connect various sites 110 (e.g., branches) that can include any number of devices 120 of the SD-WAN 102. SD-WAN 102 can facilitate the establishment of communication tunnels between various network sites, enabling the routing of application traffic through overlay tunnels based on specified policies or Service Level Agreements (SLAs).

Data processing system 130, also referred to as DPS 130, can include any combination of hardware and software for monitoring or managing a network, such as a SD-WAN 102. DPS 130 can include any functionality (e.g., computer code, instructions, data and algorithms) to monitor and address faults or issues in performance of SD-WAN 102 while maintaining the number of its API calls 144 within the SD-WAN controller 104 established API rate limits 106. For instance, DPS 130 can include the functionality to receive and utilize data or information pertaining to state or performance of the SD-WAN 102 (e.g., BFD session data 114 or IPFIX flow metrics 116) to create a SD-WAN model 132 of the SD-WAN 102 and identify any issues or faults in the SD-WAN 102 performance timely and consistently.

DPS 130 can be deployed on a server, a virtual machine or a cloud-based system internally within, or externally to, the SD-WAN 102 it monitors. DPS 130 can include the functionality to implement bidirectional forwarding detection (BFD) monitoring, including, for example, monitoring of BFD data (e.g., BFD session data 114) to identify faults or issues in the SD-WAN 102. DPS 130 can include the functionality to implement IPFIX monitoring, including for example, monitoring of IPFIX data from the SD-WAN 102. DPS 130 can include a network management system (NMS) for monitoring state, status, performance and operation of a SD-WAN 102. DPS 130 can include various functionalities, such as NetOps 150, including for example NetOps collector for collecting data from various protocols and in various formats, such as BFD data, IPFIX data, NETCONF data or SNMP data. DPS 130 can utilize an API collector 152 to issue API calls 144 within an API rate limit 106 provided by the SD-WAN controller 104 in order to define a representation or a model of the topology of the SD-WAN 102. DPS 130 can include and utilize a metric aggregator 140 to aggregate data on the performance of the elements of the SD-WAN 102 topology from various protocols and formats and convert the received data into a common format or arrangement in order to maintain an up-to-date representation or state of the SD-WAN 102.

Network operations functions 150, also referred to as NetOps 150, can include any combination of hardware and software for performing operations involving the SD-WAN 102. NetOps 150 can include, for example, a collector function for collecting data on the network performance and state of various elements from a variety of protocols or formats, such as BFD and IPFIX data. NetOps 150 can include, generate, update or utilize a SD-WAN model 132 along with performances of various models. SD-WAN model 132 can SD-WAN API collector function that can include set of technologies, tools or practices to facilitate an optimal performance of the SD-WAN 102. NetOps 150 can include a Network Management System (NMS) to monitor the SD-WAN and performance of its various components. NetOps can provide an interface for gathering data from both the management plane through APIs and the data planes for ongoing fault and performance monitoring. Leveraging the NMS and its features, NetOps can utilize action-based messaging systems to collect data and notify the NMS of any alterations in application paths, providing a comprehensive approach to network oversight and timely response to changes in fault or performance metrics. NetOps 150 can include an FMS 156 to monitor, detect and address any faults in the SD-WAN 102. NetOps 150 can include a PMS 158 to monitor, adjust and otherwise manage the performance of the SD-WAN 102.

Timer 154 can include any combination of hardware and software that sets a time upon expiration of which an action can be taken. Time 154 can be set to trigger actions periodically, such as every certain time interval (e.g., every 1ms, every 20ms, every 100ms or 1s). The timer 154 may be used to trigger one or more API calls, functions or requests to update data (from where to where). for timing the calls for update data. Timer 154 can be used by the API collector 152 to time or control the rate of the API calls 144 to the SD-WAN 102 (e.g., SD-WAN controller 104 or its performance monitors 112). Timer 154 can be used by the NetOps 150 to time or rate the calls for BFD or IPFIX (or other) data from the sites 110 or SD-WAN controller 104.

API collector 152, also referred to as API manager 152, can include any combination of hardware and software for issuing, receiving, or otherwise managing API calls 144 to the SD-WAN (e.g., SD-WAN controller 104). API collector or manager 152 can manage the number of API calls 144 to the SD-WAN 102 to maintain the number of API calls 144 below a predefined threshold limit (e.g., API rate limit 106) for the number of API calls 144 that can be made within a time period. API collector 152 can transmit the API calls 144 to receive data on the elements of the SD-WAN 102 (e.g., topology) as well as their interrelation.

Fault Management System (FMS) 156 can include any combination of hardware and software for managing faults identified or detected in the SD-WAN 102. FMS 152 can include a functionality, such as a centralized mechanism, configured or designed to oversee and handle issues or abnormalities detected within the network infrastructure. For instance, FMS 156 can detect an error with a particular tunnel 122 and can fix, reconnect or re-establish the tunnel 122 to address the issue. Utilizing data from the metric aggregator 140 and various data planes, the FMS 156 can process information related to faults, such as errors or malfunctions related to tunnels 122 or any other performance degradation or network disruptions. FMS 156 can receive indication about an error on a network from a metric aggregator 140 and take corrective action, responsive to the identified fault.

Performance Management System (PMS) 158 can include any combination of hardware and software to manage the performance of the SD-WAN. PMS 158 can include the functions or code, including for example a centralized function, to oversee, adjust, manage and optimize the performance of the SD-WAN 102, based on the collected performance data (e.g., 114 or 116). Using the information from data planes and management planes, the PMS 158 can monitor BFD session data 114 or flow metrics 116 to adjust or manage performance of various devices or entities on the SD-WAN 102. For instance, PMS 158 can utilize metrics such as bandwidth utilization, latency, and packet loss to adjust traffic routing, identify bottlenecks, and adjusts network configurations to enhance overall SD-WAN performance. For instance, if the performance data indicates an increased latency on a specific tunnel 122, the PMS 158 can reroute traffic to a lower-latency path to maintain a particular application performance or can trigger or utilize FMS 156 to reset the tunnel 122.

Notification function 160 can include any combination of hardware and software for issuing or generating notifications or alerts regarding changes, updates or events detector, observed or monitored at the SD-WAN 102. Notification function 160 can include functions for generating messages or texts notifying or alerting users or functions of the SD-WAN 102 of faults, issues, problems, such as issues relating applications executed on various devices 120, tunnels 122 having a latency or delay falling below a predetermined threshold for the latency or delay, data losses for a tunnel 122 being greater than a predetermined threshold (e.g., such as a threshold of the SLA), or any other issue related to the SD-WAN 102 being monitored by the DPS 130.

Software defined Wide Area Network 102 can include any combination of hardware and software in which software-defined networking principles can be used to improve the control, management, and optimization of networks. SD-WANs 102 can be employed by entities or organizations allowing such entities or organizations to efficiently route traffic across a network 101, improve performance, and reduce costs across diverse network connections. SD-WAN 102 Software-Defined Wide Area Network (SD-WAN) can include any network architecture that allows for the centralized control and management of a geographically dispersed network. For example, an SD-WAN 102 can include a logical network across geographically dispersed sites 110 (e.g., branch locations or offices) and having a centralized and software-defined network infrastructure to allow an efficient and secure communication between sites 110. SD-WAN 102 can include any number of sites 110, each of which can be equipped with network devices 120 such as routers and interfaces, are seamlessly interconnected. SD-WAN 102 can include any number of sites 110 across one or more networks 101, along with a SD-WAN controller 104 for facilitating network connectivity and optimizing optimize traffic, improving performance, and managing the network infrastructure.

Networks 101, including one or more networks, such as network 101 and network 101', can include a collection of interconnected computers, devices, or nodes that communicate and share resources through various wired or wireless connections. Networks 101 can include local area networks (LANs), wide area networks (WANs), metropolitan area networks (MANs), the Internet, cellular networks, a combination of wired and wireless networks or any other types of networks providing connectivity across devices 120. Networks 101 can include or support any number of SD-WANs 102. Network 101 can include functionality designed to accommodate the creation and support of numerous tunnels 122 connecting various sites.

Tunnel 122 can include any virtual, private communication channel established over one or more networks (e.g., 101 networks) and allowing a secure and encapsulated transmission of data between two endpoints. Tunnels 122 can serve as virtual pathways for efficient data transmission across the SD-WAN infrastructure, including over a variety of communication technologies and platforms (e.g., WLAN, cellular networks, wired and wireless networks or internet). Networks 101 can be structured to be flexible and scalable, allowing organizations to establish multiple communication channels or tunnels 122, supporting a variety of protocols. For instance, network 101 can facilitate the creation of tunnels 122 to support Multiprotocol Label Switching (MPLS), Broadband, and LTE connections, providing organizations with diverse options for optimizing data transfer between interconnected sites.

Network sites 110 can include any number of network devices 120. Network devices 120 can comprise a part of a SD-WAN 102 or networks 101 or 101'. For instance, network 101 can include network devices 120, such as servers, routers, switches or gateways, which can be designed to generate, process, receive, transmit and forward network traffic. Devices 120 within a network 101 can include any physical or underlay devices (e.g., computers, servers, routers), or any overlay network nodes, such as SD-WAN edge routers, tunnel endpoints (TLOCs), virtual network function instances, intermediate nodes or hubs or overlay gateways. Devices 120 can be interconnected into a network 101 or 101' and can be configured to communicate network traffic along particular network paths. Devices 120 can execute or operate applications that generate and communicate network traffic across various tunnels 122. Applications executed on devices 120 can experience faults or errors that can be indicated by network data (e.g., BFD session data 114 or flow metrics or data 116).

Sites 110 can include any physical or logical location within a network 101 in which various network devices 120 are deployed, connected, and configured to facilitate communication and data exchange. A site 110 can include a location or a branch within an organization that can include any number of network devices 120, such as such as routers, switches, and endpoints (e.g., computers, smartphones, servers, printers or any other network devices). Devices 120 can be interconnected (e.g., via network communication interfaces) using tunnels 122.

Tunnels 122 can include are virtual paths that facilitate the transmission of data between different sites 110 of a network, such as a SD-WAN 102. Tunnels 122 can facilitate secure and efficient communication, using technologies like VPNs or other tunneling protocols. For instance, tunnels 122 can connect network devices 120 across various sites of a multinational corporation with offices in different cities or geographical areas. SD-WAN 102 can be deployed to establish tunnels 122 using any particular types of communication protocols to facilitate secure and efficient network communication routers or WAN edges or endpoints at each office. Tunnels 122 can be utilized to monitor, control, manage or improve network traffic flow and performance of applications running on network devices 120.

Tunnels 122 can transmit variety of different network traffic via a variety of different protocols and formats. Network traffic can include, for example, data corresponding to multiprotocol label switching (MPLS), which can provide a protocol-agnostic networking to speed up and shape traffic flows across the network. Tunnel 122 can include or support data corresponding to overlay management protocol (OMP), which can facilitate communication and coordination between different components of the overlay network (e.g., virtualized or logical network infrastructure built on top of an existing network 101). Tunnel 122 can include, or support data corresponding to internet protocol security (IPSec) to secure and protect communication over an IP network, including using cryptographic security to protect the confidentiality and integrity of the data transmitted between the devices 120. Tunnel 122 can include or support data corresponding to datagram transport layer security, to provide secure communication over a datagram transport layer, such as user datagram protocol (UDP). Tunnels 122 can include synthetic data that can include artificially generated data packets or traffic used for simulating or testing real network traffic communication (e.g., testing or measuring of latency, jitter, delays, packet loss or other aspects or parameters of network performance).

SD-WAN controller 104 can include any combination of hardware and software for monitoring, controlling or managing SD-WAN 102. SD-WAN controller acts 104 can be a central point of control in a SD-WAN 102, managing the network and coordinating elements of SD-WAN 102. SD-WAN controller 104 can establish and enforce API rate limits 106 to control the number of API calls 144 SD-WAN 102 can receive from the external sources. SD-WAN controller 104 can include a network management system (NMS), which can include a software platform for monitoring, control, and management of network resources. API rate limit 106 established by SD-WAN controller 104 can include any limitation for the number of API calls 144 that a DPS 130, or any other device or entity, can make within a particular time period. By establishing such a limit, SD-WAN controller 104 can control the ensuring optimal network performance and preventing excessive load on the SD-WAN 102. Additionally, the SD-WAN controller 104 integrates performance monitoring capabilities to supervise the network's functionality and responsiveness. SD-WAN controller 104 can facilitate adjustments to the network environment, optimize traffic routing using overlay tunnels 122, and address issues related to application performance or network reliability. For instance, in an organization with geographically dispersed sites, an SD-WAN controller 104 can monitor delays, jitter, latency, transmission rates, data loss across various tunnels 122 and implement adjustments to the devices 120 (e.g., applications) or data routing to allow for an efficient and controlled communication between the sites 110.

API calls 144, also referred to as application programming interface calls, can include any requests between software applications. API calls 144 can include requests according to rules, policies or protocols, including for example to retrieve data on performance of devices 120 or tunnels 122. API calls 144 can be used to communicate with the SD-WAN controller 104 and facilitate the retrieval of information related to network topology (e.g., arrangement or configuration of network elements), performance metrics, and other relevant data. For instance, an SD-WAN collector of the NetOps may use API calls 144 to query the SD-WAN controller 104 for updates on the state of the SD-WAN 102, including to inquire about performance of particular devices 120 or tunnels 122.

Performance monitors 112 can include any combination of hardware and software for monitoring performance or state of a network, such as a SD-WAN 102. Performance monitors 112 can include functionality for observing and analyzing operational aspects and conditions of SD-WAN elements, such as devices 120, tunnels 122, interfaces, SLA paths or policies, as well as network traffic flow of various applications traversing the network. Performance monitors 112 can collect and analyze metrics (e.g., performance data) from various devices 120 of various sites 110, including any data indicative of network bandwidth, latency, jitter and packet loss to gauge the performance and states of devices 120 and tunnels 122 within the SD-WAN 102. Performance monitors 112 can utilize BFD, IPFIX and other protocols and formats to receive and gather data on the SD-WAN operation. Performance monitors 112 can use the data gathered to identify potential issues and adjust and improve network operation. For instance, the performance monitor 112 can track the throughput of tunnels, detect anomalies in latency, or assess the responsiveness of network devices, offering valuable insights for effective SD-WAN management.

Depending on implementation, a performance monitor 112 can be implemented as a part of, or in combination with, a SD-WAN controller 104. For instance, a SD-WAN controller 104 can utilize a performance monitor 112 to monitor and analyze operation and performance of the entire SD-WAN 102 (e.g., including one or more, or all of the sites 110). Depending on implementation, a performance monitor 112 can be implemented on a site 110 and monitor and analyze performance and operation of the site 110 alone. In some implementations, a performance monitor 112 for an entire SD-WAN 102 can be used by a SD-WAN controller 104 and one or more performance monitors 112 can be implemented on one or more sites 110 to monitor data for the individual sites 110.

Bidirectional Forwarding Detection (BFD) session data 114, also referred to as BFD session data 114,BFD data 114, or network fault data 114 can include any information gathered from monitoring and managing BFD sessions in a network. BFD session data 114 can include any data corresponding to a session or a connection between two devices. BFD data 114 can include any information corresponding to low-overhead detection of faults on physical media, including Ethernet, virtual circuits, tunnels and MPLS label-switched paths. BDF data 114 can include information on BFD sessions that can be established between two endpoints over a particular link and can include data that is encapsulated. BFD data can operate in an asynchronous and demand mode and can provide information indicative of the state (e.g., active, down or inactive) of any entity of SD-WAN 102. A BFD session can include a mechanism for detecting faults in the forwarding path and can include the exchange of control packets at a high frequency to identify failures. BFD sessions provide real-time monitoring of link status, allowing for a prompt reaction by the solution.

To gather and use network fault data 114, DPS 130 can utilize any network protocol or standard that can be used to detect faults or failures between two network devices (e.g., routers or switches) connected by a link. For example, network fault data 114 can be gathered using any network protocol configured to indicate a failure of a communication link. For network protocol providing BFD session data 114 can include any protocol for detecting failures in communication paths or providing information for detecting or identifying link failures between network devices. As DPS 130 (e.g., metric aggregator) can implement bidirectional forwarding detection monitoring, the DPS 130 can identify various details or features of BFD session data 114. BFD can include any network protocol that provides detection of link or path failures between two devices 120, such as routers or other elements of a network 101 or SD-WAN 102. In an SD-WAN 102, BFD session data 114 can include information, data or details corresponding to the state, status or performance of communication network paths between SD-WAN devices (e.g., tunnels 122 between various devices 120 or network elements). For example, BFD session data 114 can include information on the round-trip time, packet loss, or the overall health of the paths. BFD session data 114 can be indicative of network issues and allow the system 100 to address issues promptly, providing an efficient and reliable communication between SD-WAN nodes. BFD session data 114 can be used to assess the integrity of connections, enabling SD-WAN controllers 104 to make informed decisions about routing and optimizing traffic flow based on real-time network conditions. BFD session data 114 can also provide a metric aggregator 140 with data or information on the state of the SD-WAN 102 network elements (e.g., overlay and underlay components of the network). BFD session data 114 can include information indicative of state of a tunnel 122, any faults or errors corresponding to a device 120, tunnel 122 or application performance.

Flow metrics 116 can include any information or data on flow of network traffic across the SD-WAN 102. As DPS 130 (e.g., metric aggregator) implements bidirectional forwarding detection monitoring, the DPS 130 can identify various details or features of BFD session data 114. Flow metrics 116 can include information or data on performance of network transmissions via designated paths (e.g., tunnels 122). For example, flow metrics 116 can include data or information indicative of data transmission rate, data reception rate, jitter, latency, data loss or delays. Flow metrics 116 can be provided via any number of protocols or formats, such as IPFIX. For example, flow metrics 116 can be provided using any network protocol configured to indicate metrics of flow of network traffic or any protocol providing export of flow information from network devices for traffic analysis and monitoring. For instance, flow metrics 116 can be provided using any protocol or process collecting and transmitting information about network flows or patterns of network communications between network devices.

IPFIX can include any protocol for collecting and exporting flow information in a network. Flow information can include any information about patterns or details of communication or communicated traffic between network devices. Any protocol or technique, such as IPFIX, can be used to provide flow metrics 116, including any protocol facilitating or providing information or data about patterns or details of communicated traffic within a network (e.g., between network devices). IPFIX can facilitate the export of flow information from network devices to collectors and support the monitoring of network traffic, providing insights into metrics such as jitter, delay, and transmission rates. IPFIX can facilitate efficient analysis of network performance and identification of potential issues. IPFIX can include data on a flow of network packets across a particular point, such as a tunnel or an endpoint. Flow metrics 116 in the context of IPFIX can be referred to as IPFIX flow metrics and can include data on network flows, can be indicative of a sequence of packets from a source to a destination sharing common attributes like the source and destination IP addresses, ports, and protocol type. For example, IPFIX flow metrics 116 can include details such as the volume of data transferred, duration of the flow, or specific application protocols used. In a SD-WAN 102, IPFIX can be utilized to monitor and analyze network traffic flows and provide insights into application performance and network behavior. By collecting and analyzing network data, such as BFD session data 114 or IPFIX flow metrics 116, metric aggregator 140 can optimize traffic routing, troubleshoot issues, and enhance overall network efficiency based on real-time flow data. Other than IPFIX, flow metrics 116 can be provided using other protocols, such as NetFlow, sFlow, J-Flow, NetStream or Cflowd. For example, packet sampling in which network packets are randomly selected and analyzed can be used instead of IPFIX to determine flow metrics 116 or BFD session data 114.

SD-WAN model 132 can include any model of a SD-WAN 102. SD-WAN model 132 can include any structured representation of the network architecture (e.g., SD-WAN 102). SD-WAN model 132 can include, for example, a graph data model that includes representations of elements such as routers, interfaces, tunnels, SLA classes, and TLOCs as vertices 134, with their relationships delineated as edges 136. SD-WAN model 132 can be generated using a metric aggregator 140 that compiles data from diverse SD-WAN sources, such as BFD and IPFIX protocols or data, or API calls 144. The topology of the SD-WAN model 132 can be constructed through various means, such as using API calls 144 or other protocols or formats, including simple network management protocol (SNMP) or BFD and IPFIX data. For instance, API calls 144 to SD-WAN management appliances can facilitate receiving information on routers and interfaces, while BFD or IPFIX data can facilitate receiving timely or real-time data on path metrics. SD-WAN model 132 can include a hierarchical model of the SD-WAN components, relational model with tables describing relations between network elements, entity-relationship model represented using elements and diagrams of relations connecting the elements, a network model representing nodes and links of the SD-WAN 102 or any other model for describing the state of a SD-WAN 102. In an example, data describing the SD-WAN model 132 can include relationships indicative of the structure of the SD-WAN 102. For instance, the data can indicate identification keys for devices 120 (e.g., routers) and tunnels 122 using site identifier (siteID), system IP address (SystemIP), source internet protocol (PI) address (srcIP), source TLOC (srcTloc), remoteTloc, and remoteIP. The data can indicate the tunnel states and performance metrics of various vertices 134 and edges 136, allowing for timely or real-time troubleshooting and alerting users to application path failures and other issues in the SD-WAN 102.

Vertices 134 can include any unit or node representing a distinct element of an SD-WAN 102. Vertices 134 can include building blocks that capture distinct aspects of the SD-WAN infrastructure. For instance, a vertex could represent an endpoint device 120, a router, a site 110, an interface (e.g.., a communication port or interface), a tunnel 122, an SLA path, a policy (e.g., a QoS policy) or any other overlay or underlay aspect or features of an SD-WAN architecture. Each vertex 134 can be characterized by specific properties, such as the router's system IP address, device's MAC address, an application identifier (e.g., corresponding to application utilizing a tunnel 122 for data traffic), identifier of a site 110, or the interface's configuration details. The relationship between vertices 134 can be expressed through edges 136 in the SD-WAN model 132, forming a comprehensive representation of the interconnected components within the SD-WAN 102. For example, by leveraging vertices 134 a graph data model of an SD-WAN 102 can provide a structured and scalable organizing information, allowing for efficient network analysis, monitoring and troubleshooting of faults and issues.

Edges 136 can include or corresponds to any connections or relationships between vertices 134. Edges 136 can represent, indicate, describe or correspond to links and associations among different elements in the SD-WAN 102 (e.g., underlay or overlay features of the network). Edges 136 can include connections indicative of how the various components interact and communicate within the SD-WAN infrastructure. For instance, an edge 136 can indicate the relationship between a router vertex 134 and an interface vertex 134, indicating that the router is connected to that specific interface. Similarly, edges 136 can represent the association between two sites 110, capturing the existence of a site-to-site connection or VPN tunnel 122. Edges 136 can provide indications of relationships within the SD-WAN model 132 and present network's topology and connectivity.

Metric aggregator 140 can include any combination of hardware and software for aggregating data or information on the SD-WAN 102. Metric aggregator 140 can include functionality for receiving data or information about SD-WAN 102 from a variety of sources and in a variety of formats or protocols (e.g., BFD data 114, IPFIX data flow metrics 116, API calls 144 or any other protocol or data) and converting such received data into a single protocol or a format. Metric aggregator 140 can include, generate, update or maintain a SD-WAN model 132. Metric aggregator 140 can convert the data into a format for generating SD-WAN model 132 to represent all of the vertices 134 and edges 136 according to a common format, using any data from a variety of other formats. To convert the data from different formats to the format of the DPS 130, metric aggregator 140 can use a format converter 142.

Format converter 142 can include any combination of hardware and software to convert data or information on SD-WAN 102 from various formats or protocols into the protocol or format of the metric aggregator 140. Format converter 142 can receive BFD session data 114 and flow metrics 116 from BFD, IPFIX and other protocols and convert them into a common format of the metric aggregator 140. Format converter 142 can convert data or information about SD-WAN 102 (e.g., information on devices 120 or tunnels 122) from BFD session data 114 or flow metrics 116 and converting them into an arrangement, a format (e.g., tables of elements and relations) or other data formats (e.g., a graph model) used by the metric aggregator 140 to monitor the SD-WAN 102.

Metric aggregator 140 can include a portable set of action messages, including, for example, CHECK_BFD to check BFD session data 114 on a particular element of the network, CHECK_APP_ROUTE to update information on a particular tunnel path, BFD_SESSION_INFO to receive information on a particular BFD session, APP _ROUTE _STATS to receive statistical information for a particular data route of an application, GET _TUNNEL to receive information on a particular tunnel 122, UPDATE _TUNNEL to receive update information on a tunnel 122, FETCH_SLA_CLASS to receive information on a SLA of a particular element, ALL_TUNNELS to receive information on all tunnels 122 of a SD-WAN, LOCATE PERFORMANCE MONITOR to locate information about a particular performance monitor 112 for a particular site or a SD-WAN 102, CREATE _PATH to create a path for a particular network communication or a tunnel, and RAISE_ALERT to generate a notification (e.g., using a notification function 160).

Metric aggregator 140 can include one or more algorithm registers with the Network Management System (NMS), engaging in JSON-format request and response interactions (e.g., RFC 8927) which can be used to collect, normalize, compute, update the graph nodes, and alert based on data from diverse sources. For instance, to fetch all SD-WAN routers modeled in NMS, the algorithm can use the GET_SDWAN_ROUTERS action or commands with the following JSON input parameters: {"action": "GET_SDWAN_ROUTERS", "input": {"hostaddress": " "} }. For example, system 100 can utilize a GET_TUNNEL action to attempts to fetch the tunnel modeled in NMS using input parameters such as source IP, local TLOC, remote TLOC, and remote IP, using the following JSON code: {"action": "GET_TUNNEL", "input": {"srcip": "", "localTloc": " ", "remoteTloc": " ", "remoteIP": " "} }. Actions using such code or commands can include or be used for various functionalities, providing a flexible and comprehensive framework for SD-WAN network management.

Metric Aggregator 140 can include or utilize an algorithm implementing a BFD data processor and using a series of actions for efficient SD-WAN network management. For instance, metric aggregator 140 can initiate a GET _SDWAN _ROUTERS action to the Network Management System (NMS) (e.g., SD-WAN controller 104), to request all Edge Routers (e.g., vertices 134) modeled from the topology graph (e.g., inventory of the SD-WAN 102). For each router element, a subsequent action message, "CHECK_BFD," can be sent to the NMS with input parameters such as {"router": {"siteid": " ", "systemip": " "}}. Upon successful reply, a BFD_SESSION_INFO action message can be sent to the NMS, seeking a list of BFD sessions. An example of the input parameters for this action can include: { bfdsessionlist: [{"srcIP": "1.1.1.2", "LocalTLoc": "mpls", "remoteTloc": "mpls", "remoteIP" which can be indicated in a format of "x.x.x.x "siteId": "40", "state": "UP"}]}

For each BFD session, a GET_TUNNEL action can be sent to the NMS (e.g., SD-WAN controller 104), passing tunnel parameters like {"tunnel": {"srcip": " ", "localTloc": " ", "remoteTloc": " ", "remoteIP": " "}} to uniquely identify the tunnel 122. The NMS can process the GET_TUNNEL action, fetching the tunnel parameters and forming a key using these parameters, e.g., "srcip-localTloc-remoteTloc-remoteIp." This key can then be used to find the corresponding tunnel 122 in the topology. Once a tunnel match is found, the state property can be read from the tunnel vertex, and a comparison can be made with the received state data in JSON. If the result shows that the two compared data are not equal, an UPDATE_TUNNEL action can be sent to the NMS with input parameters like {"tunnel": {"name": {"srcip-localTloc-remoteTloc-remoteIp"}, "state": " "}}. Simultaneously, the event management systems within the NMS can be notified to send a RAISE_ALERT, alerting users of the tunnel changes, to provide effective monitoring and management of BFD data within the SDWAN network.

Metric aggregator 140 can include an algorithm that initiates the process by sending an action message "CHECK_APP_ROUTE" to the NMS to verify if the router supports Application Aware Routing. This can provide the routerId {"router" : ."siteid" :" ", "systemip" : " "} as an input action parameter. Upon success, the algorithm can proceed to send an "APP ROUTE _STATS" action message to the NMS, requesting a list comprising app-route statistics. For each set of app-route statistics, such as {"srcIP" : "e.g., x.x.x.x" IP address, "srcPort" : "12346", "local-color":"mpls", "remote-color" :"mpls", "destIP":"1.1.2.20","destPrt": "12467", "sla-class-index":"4", "loss" : " ", average-latency":" ", average-jitter:" ", "tx-data-pkts": "121333" , "rx-data-pkts":" 121223"}, the algorithm can send a GET_TUNNEL action to the NMS, specifying the app-route parameters {"tunnel": {"srcip":" ","localTloc":" ","remoteTloc":" ","remoteIP":" "}} for unique tunnel identification.

For example, SD-WAN controller 104 (e.g., NMS) can parse the GET_TUNNEL action, fetch the tunnel parameters, and form a key by concatenating the tunnel parameters, each delimited by a hyphen, like "srcip-localTloc-remoteTloc-remoteIp". Using this key { "name": "srcip-localTloc-remoteTloc-remotelp"}, the algorithm can locate the corresponding tunnel in the topology. Once the tunnel match is found, the algorithm can retrieve the Service Level Agreement (SLA) class configured on that tunnel using the specified sla-class-index, for example, "sla-class-index" : "4".

Metric aggregator 140 can include an SDWAN tunnel metric aggregator algorithm that initiates a process of retrieving SLA data by sending a FETCH SLA _CLASS action to the Network Management System (NMS). For example, the input could be { "sla-class": "sla-class-index":"4"}, and the response would contain the SLA metrics, such as { "sla-class" : "loss" : "0 ", "latency": "1000 " , "jitter":"1000 "}. The process can then verify if the SLA defined on the application is violated by comparing the tunnel's app_route statistics with the SLA class metrics. The process can check conditions such as tunnel_app_route_stat(loss) <= sla_class(loss), tunnel _app_route_stat(average_latency) <= sla_class(latency), and tunnel_app_route_stat(average_jitter) <= sla_class(jitter). If these conditions are met, the process can return TRUE, indicating that the SLA path (application path) is not in violation. Otherwise, it can return FALSE, signifying that the application path has changed to a different tunnel.

Following such a verification, the process of the SD-WAN tunnel metric aggregator can notify the event management systems function (e.g., NetOps or notification function 160) to send a RAISE_ALERT, alerting users to the changes in the application path. In doing so, the solutions can aid in diagnosing application performance faults or problems. In case the router has enabled flow but not the management protocols (NetConf / SNMP), the process can monitor the BFD flow records exported by the router. The IPFIX flow template can provide BFD flow elements, such as {sourceipv4Address, sourceIpv6Address, srcPrt, destPrt, destIpv4Addr, destIpv6Addr, overlay _sessionid, sla-not-met}. Additionally, TLOC_table{localColor, RemoteColor} and Bfd_table{loss, avg_latency, avg Jitter} can be considered for further analysis.

For each flow record, the process of the metric aggregator 140 can proceed with a sequence of steps to update tunnel metrics and analyze application-specific information. For instance, the process can begin by using the overlay session ID element to fetch the respective TLOC, BFD, and App Information. The flow data can be normalized to update the tunnel metrics (e.g., in the SD-WAN model 132). For instance, when seeking to obtain SrcIP and remoteIP, the algorithm can use the Tunnel Info, considering conditions such as if SrcIPv4 is populated, it can use srcIPv4 as SrcIP. If SrcIPv6 is populated, the process algorithm can use srcIPv6 as SrcIP. Similarly, if destIPv4 is populated, the process can use destIPv4 as remoteIP. Otherwise, if destIPv6 is populated, the process can use destIPv6 as remoteIp.

Metric aggregator 140 can transform BFD and TLOC table data into app-route metrics, generating a format like {"srcIP": "x.x.x.x", "srcPort": "12346", "local-color":"mpls", "remote-color":"mpls", "destIP":"1.1.2.20", "destPrt": "12467", "sla-class-index":"4", "loss": "", "average-latency":"", "average-jitter":"", "tx-data-pkts": "121333", "rx-data-pkts":"121223"}. The process can proceed by sending a GET_TUNNEL action to NMS, passing the app-route parameters {"tunnel": {"srcip":" ","localTloc":" ","remoteTloc":" ","remoteIP":" "}} to identify the tunnel 122. The NMS can parse the GET_TUNNEL action, fetching the tunnel parameters and forming a key by concatenating the tunnel parameters, each delimited by a hyphen "srcip-localTloc-remoteTloc-remoteIp". For instance, the key {"name": "srcip-localTloc-remoteTloc-remoteIp" } can be used to find a tunnel 122 in the topology. The algorithm of metric aggregator 140 can examine the SLA-not-met element from the flow to determine if the SLA is violated or not. For instance, the algorithm can notify the event management systems within the NMS to send a RAISE_ALERT, alerting users of the changes in the application path, facilitating the diagnosis of application performance problems.

If the management protocols, such as network configuration protocol (NETCONF) or SNMP, are not enabled on Edge routers, and local site deployed performance monitors 112 (e.g., for monitoring performance of devices 120 on an individual site 110) is deployed in all the sites 110 for active path monitoring, the metric aggregator 140 can proceed with specific actions. For instance, the metric aggregator 140 can initiate by sending an ALL_TUNNELS action to NMS, retrieving all the tunnels modeled in the SDWAN network. For each tunnel obtained, the algorithm of the metric aggregator 140 can send a LOCATE_LOCAL_MONITOR action to the performance monitors 112 services or NMS and can use the srcIP and destIP properties of the tunnel. The local performance monitors 112 can then locate the source and destination monitoring points using the source and destination IPs of the tunnel within the same subnet. The algorithm can facilitate the local performance monitor node (e.g., the monitoring point) next router hop is the edge router. For example, if the Tunnel srcIP is indicated with a first IP address in the format of x.x.x.x, with a network mask of 255.255.255.0 and the monitoring point's src_ip (e.g., source IP address) is indicated in the format of x.x.x.x with a mask of 255.255.255.0, the algorithm can perform an AND operation on the IP and mask, resulting in a related subnet address, e.g., x.x.x.x.. This can indicate that this element is the source monitoring point for sending synthetic traffic.

The algorithm of the metric aggregator 140 can send a CREATE_PATH action to its respective local performance monitoring node (e.g., monitoring point) to establish a network path between the source and destination Monitoring Points. The algorithm can send a GET_PATH_STATUS action to retrieve the path status for every tunnel path and also send a GET_TUNNEL action to locate the tunnel model (vertex) in the NMS graph topology. After the NMS parses the GET_TUNNEL action, the NMS can proceed to proceeds to fetch the tunnel parameters and forms a key by concatenating these parameters, each delimited by a hyphen, creating a structure like "srcip-localTloc-remoteTloc-remoteIp". This key, denoted as { "name": "srcip-localTloc-remoteTloc-remoteIp" }, can be used to locate the tunnel in the topology. Once the tunnel match is identified, the metric aggregator 140 algorithm can read the state property from the tunnel vertex 134 and compares it with the received state data in JSON format. If the states are not equal (e.g., indicating a change in the tunnel state), the algorithm can send an UPDATE_TUNNEL action to NMS. The state information can be passed as input, structured as { "tunnel": { "name": { "srcip-localTloc-remoteTloc-remoteIp" }, "state": " " } }. The algorithm can notify the event management system, which can be a part of NMS, to send a RAISE_ALERT. This alert can notify users of the changes in the tunnel, facilitating prompt user awareness and intervention.

When the usage monitoring (flow) is enabled on the local performance monitor collector for SD-WAN, it can collect BFD flow metrics for performance analysis. For each flow record, utilizing the overlay session ID element, the algorithm can retrieve corresponding TLOC, BFD, and application data. This flow data (e.g., flow metrics) can be normalized to update tunnel metrics. Extracting SrcIP and remoteIP from the Tunnel Info can include using the populated IPv4 or IPv6 addresses accordingly. Transforming BFD and TLOC table data into app-route metrics can produce a structured output (e.g., {"srcIP": "x.x.x.x", "srcPort": "12346", "local-color": "mpls", "remote-color": "mpls", "destIP": "x.x.x.x", "destPrt": "12467", "loss": " ", "average-latency": " ", "average-jitter": " ", "tx-data-pkts": "121333", "rx-data-pkts": "121223"}). Following this, the algorithm can send a GET_TUNNEL action to NMS, providing the necessary app-route parameters {"tunnel": {"srcip": " ", "localTloc": " ", "remoteTloc": " ", "remoteIP": " "} } to uniquely identify the tunnel. NMS parses this action, fetches the tunnel parameters, and forms a key by concatenating these parameters. The key, in the format {"name": "srcip-localTloc-remoteTloc-remotelp"}, is then employed to locate the tunnel in the topology. The algorithm can use the SLA-not-met element from the flow to determine if the SLA is violated. If necessary, it notifies the event management systems (e.g., a part of NMS) to send a RAISE_ALERT. This can alert users of changes in the application path, aiding in the diagnosis of application performance issues.

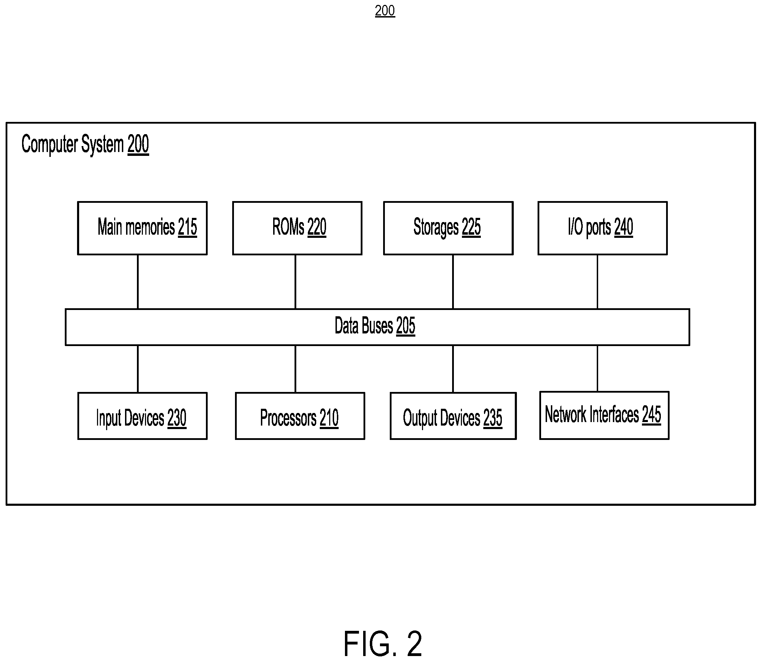

FIG. 2 illustrates a block diagram of an example computer system 200, which can also be referred to as a computing system 200. Computer system 200 can include or be used to implement any computation or processing of system 100 (e.g., command, protocol or data processing) described herein. Computer system 200 can be included in and run any device (e.g., server) or service of a DPS 130 or at the SD-WAN 102 side (e.g., devices 120 on sites 110). Computer system 200 can be used for operating, implementing or running SD-WAN 102 elements, such as devices 120, tunnels 122, or any other feature or functionality described herein.

Computing system 200 can include at least one bus data bus 205 or other communication component for communicating information and at least one processor 210 or processing circuit coupled to the data bus 205 for processing information. Computing system 200 can include one or more processors 210 or processing circuits coupled to the data bus 205 for exchanging or processing data or information. Computing system 200 can include one or more main memories 215, such as a random access memory (RAM), dynamic RAM (DRAM) or other dynamic storage device, which can be coupled to the data bus 205 for storing information and instructions to be executed by the processor(s) 210. Main memory 215 can be used for storing information (e.g., data, computer code, commands or instructions) during execution of instructions by the processor(s) 210.

Computing system 200 can include one or more read only memories (ROMs) 220 or other static storage device coupled to the bus 205 for storing static information and instructions for the processor(s) 210. Storage 225 can include any storage device, such as a solid state device, magnetic disk or optical disk, which can be coupled to the data bus 205 to persistently store information and instructions.

Computing system 200 may be coupled via the data bus 205 to one or more output devices 235, such as speakers or displays (e.g., liquid crystal display or active matrix display) for displaying or providing information to a user. Input devices 230, such as keyboards, touch screens or voice interfaces, can be coupled to the data bus 205 for communicating information and commands to the processor(s) 210. Input device 230 can include, for example, a touch screen display (e.g., output device 235). Input device 230 can include a cursor control, such as a mouse, a trackball, or cursor direction keys, for communicating direction information and command selections to the processor(s) 210 for controlling cursor movement on a display.

Computer system 200 can include input/output ports 240, also referred to as I/O ports 240, can include physical interfaces that facilitate or provide communication between external or peripheral devices and processor(s) 210 and/or memory 215. I/O ports 240 can be connected to data bus 205, allowing the transfer of data between the processor(s) 210, memories 215, and any external devices (e.g., keyboards, mice, printers, and external storage devices). Computer system 200 can also include one or more network interfaces 245 coupled via data buses 205. Network interfaces 245 can include any physical or virtual components enabling communication between the computer system 200 and any external networks (e.g., the Internet). Network interface 245 can provide transfer of data between the processor(s) 210, memories 215 and any external networks.

The processes, systems and methods described herein can be implemented by the computing system 200 in response to the processor 210 executing an arrangement of instructions contained in main memory 215. Such instructions can be read into main memory 215 from another computer-readable medium, such as the storage device 225. Execution of the arrangement of instructions contained in main memory 215 causes the computing system 200 to perform the illustrative processes described herein. One or more processors 210 in a multiprocessing arrangement may also be employed to execute the instructions contained in main memory 215. Hard-wired circuitry can be used in place of or in combination with software instructions together with the systems and methods described herein. Systems and methods described herein are not limited to any specific combination of hardware circuitry and software.

Although an example computing system has been described in FIG. 2, the subject matter including the operations described in this specification can be implemented in other types of digital electronic circuitry, or in computer software, firmware, or hardware, including the structures disclosed in this specification and their structural equivalents, or in combinations of one or more of them.

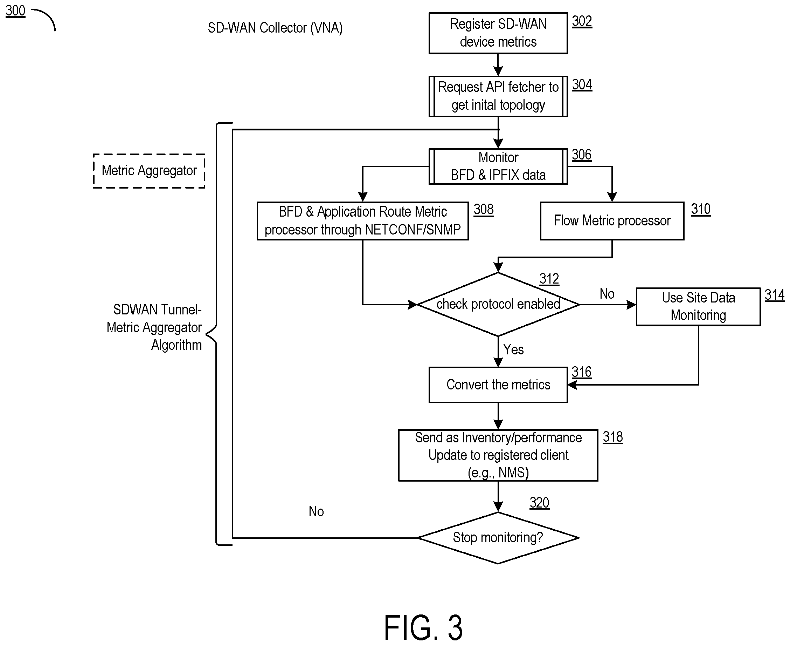

FIG. 3 illustrates a flow diagram of a method 300 for SD-WAN management within API rate limits utilizing network protocol data. Method 300 can be implemented, using, for example, system 100 having components (e.g., devices 120) utilizing computing systems 200. Example method 300 can be used for collecting and aggregating SD-WAN data to monitor, detect and identify network issues and provide timely alerts, notifications or other actions facilitating addressing of the identified issues.

Example method 300 can include acts 302-322. At 302, a data processing system (DPS) can register SD-WAN device metrics. At 304, DPS can request API fetcher to get initial topology of SD-WAN. At 306, the metric aggregator can monitor BFD and IPFIX data. At 308, BFD and application route metric processor can utilize NETCONF and SNMP features. At 310, flow metric processor can receive data. At 312, metric aggregator can check if the protocols are enabled. At 314, site data monitoring can be implemented if the protocols are not enabled. At 316, metrics can be converted. At 318, inventory/performance update can be sent to registered client. At 320, the DPS can determine whether to stop monitoring or to continue monitoring with a new data set.

At 302, a data processing system (DPS) can register SD-WAN device metrics. For example, an SD-WAN API collector can register SD-WAN device metrics with the metric aggregator. DPS can receive data on various elements of a network of SD-WAN, such as routers, switches, end points (e.g., computing devices or servers), tunnels, policies and other underlay or overlay features of a SD-WAN. Each of the features or elements can be registered in a database and stored in data structures, databases or tables. For example, elements of a SD-WAN can be registered or noted in a data structure of a SD-WAN model for capturing and monitoring the state and performance of the SD-WAN and its elements.

At 304, DPS can request API fetcher to get initial topology of SD-WAN. SD-WAN collector can utilize a timer to trigger one or more API calls to SD-WAN controller to request information or data on topology of the network. The API calls can be sent to the SD-WAN controller to request information on all elements of the SD-WANN, including any devices (e.g., routers, end-point devices) or tunnels (e.g., connections, data paths). Elements can include underlay elements, such as network devices and structures and overlay elements, such as sites, SW-WAN tunnels and data paths.

At 306, the metric aggregator can monitor BFD and IPFIX data. The metric aggregator can utilize NetOps to receive BFD session data corresponding to statistics indicative of the current state of the tunnels. BFD session data can include information indicative of faults or application performance issues. The metric aggregator can receive IPFIX flow data that can include information on performance metrics, such as jitter, latency, transmission and receiving rates of data, as well as data loss and delay information.

At 308, BFD and application route metric processor can utilize NETCONF and SNMP features. The metric aggregator can use BFD and the application route metric processor to enhance network monitoring through the utilization of NETCONF and SNMP features. BFD can provide information on any errors or faults in the network by periodically checking the liveliness of communication paths. Using NETCONF the metric aggregator can communicate with network devices, such as routers or end points, to retrieve BFD session information and receive data on the performance of network paths. Metric aggregator can use SNMP to fetch application route metrics, including parameters like loss, latency, and jitter. By combining the capabilities of BFD, NETCONF, and SNMP, the metric aggregator can implement timely (e.g., real-time) to network monitoring, enabling the timely identification and resolution of performance issues within the SD-WAN environment.

At 310, flow metric processor can receive data. Metric aggregator can include a flow metric function processor for receiving and detecting flow metric data. The flow metric processor can recognize flow metric network packet from a stream of one or more data packets. Flow metric aggregator can identify payload of flow metric data, such as from IPFIX data. For example, metric aggregator can determine or detect data on latency, jitter, delay and loss from the incoming traffic. Performance metrics can be received periodically, such as for example, based on the timer request.

At 312, metric aggregator can check if the protocols are enabled. Metric generator can determine if the SD-WAN enables the protocols (e.g., BFD or IPFIX). For example, based on the incoming network traffic at acts 308 or 310, metric aggregator can determine if the SD-WAN includes information or data that allows for monitoring of SD-WAN performance using the protocol data (e.g., BFD and IPFIX). For instance, metric aggregator can determine if BFD and IPFIX data are enabled or provided by the SD-WAN communications (e.g., from the SD-WAN controller) such that performance and state of the SD-WAN can be determined.

At 314, site data monitoring can be implemented if the protocols are not enabled. If at 312 the DPS determines that the protocol is not enabled or provided, at 314 the metric aggregator can communicate with local performance monitors at each of the sites of the SD-WAN to receive the data on the performance and the state of the network elements from the sites directly. For example, responsive to determining that SD-WAN controller does not provide BFD session data or IPFIX indicative of the performance or faults at the SD-WAN, metric aggregator can send a command to request performance monitors of the sites of the SD-WAN to share their data on the performance of the network. For example, performance monitor of each of the sites can gather and collect data on tunnel or application faults, jitter, delay, packet loss, transmission and receiving rates and other information that can be provided by BFD session data or IPFIX flow data. This data can then be received by the received and aggregated by the metric aggregator similar to the BFD session data and IPFIX flow data.

At 316, metrics can be converted. The metric aggregator can use a format converter to convert the BFD session data (e.g., BFD data) and the flow data (e.g., IPFIX data) into a format of the SD-WAN model 132. For instance, upon receiving BFD and IPFIX flow data, the metric aggregator can process this information and transform it into the format of the SD-WAN model. This can include updating the inventory and performance metrics associated with various SD-WAN elements, such as routers, interfaces, tunnels, SLA classes, and TLOCs. The metric aggregator utilizes a comprehensive graph data model to represent these elements as vertices and their relations as edges within the network. For example, the format converter can convert the BFD data and the flow data into a format or arrangement that can include tables and values representing elements of the SD-WAN. The format converter can convert any data from any format or protocol into the format or protocol of the metric aggregator, such as the format provided in examples 400-700.

At 318, inventory/performance update can be sent to registered client. Once the metric aggregator converts the incoming data into a format of the SD-WAN model or the metric aggregator, the metric aggregator can send the information on the updated inventory or performance to a registered client. The algorithm can send the updated inventory and performance metrics to registered clients through a messaging system. In doing so, the NMS or other external endpoints can receive real-time and consistent data, allowing for effective monitoring and troubleshooting of the SD-WAN environment. The process facilitates the timely identification of faults, performance issues, and topology changes, enabling a more responsive and efficient network management approach.

At 320, the DPS can determine whether to stop monitoring or to continue monitoring with a new data set. At this point the metric aggregator can determine whether to continue with another cycle of monitoring (e.g., go back to act 304 or 306) or whether to terminate the process. For example, the method 300 can determine, at 320, to repeat the monitoring cycle and go back to act 304 to update the inventory or to act 306 to update the faults and performance data (e.g., BFD and IPFIX flow data).

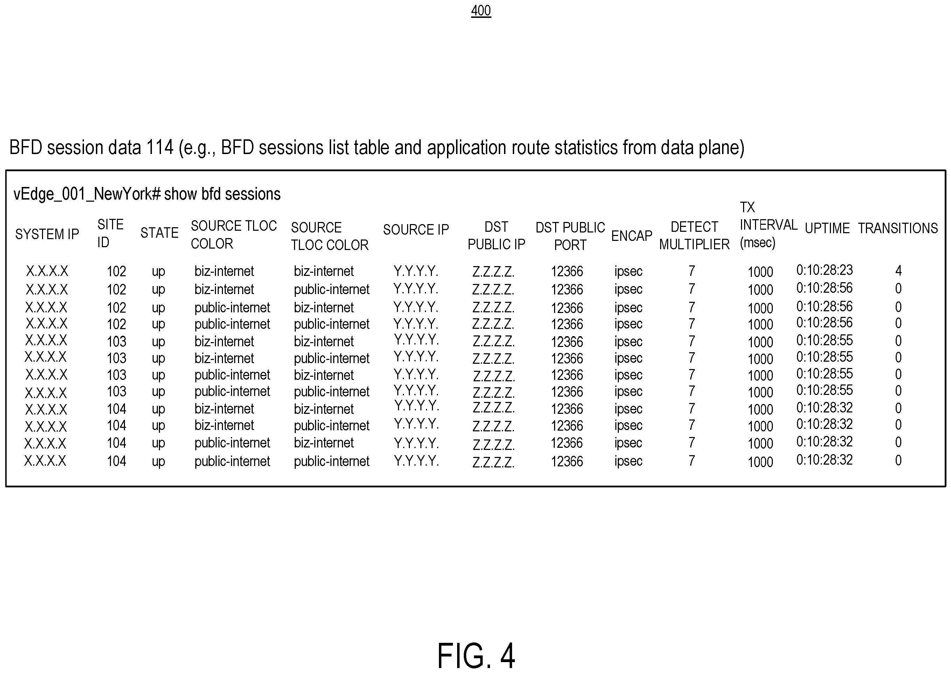

FIG. 4 illustrates an example 400 of a table of BFD session data 114 that can be received and used by the metrics aggregator 140 for monitoring and management of SD-WAN 102. Example 400 can include a BFD session data 114 that can include a BFD sessions list table comprising various information or data corresponding to a particular router device (e.g., edge router) and identifying the location of the router device (e.g., a particular site or branch). BFD session data 114 can include multiple readings across multiple time stamps (e.g., time period). For each reading, the BFD session data 114 can include an IP address of the system (e.g., router), site identifier (e.g., site ID of 102), a state of the device (e.g., up state or active state), a source TLOC color (e.g., biz-internet or public-internet), a source IP address, a destination IP address, a destination public port, an ENCAP (e.g., encapsulation protocol), a detect multiplier (e.g., number of missed attempts before determining device to be unreachable), transmission interval, uptime and transitions (e.g., number of state transitions).

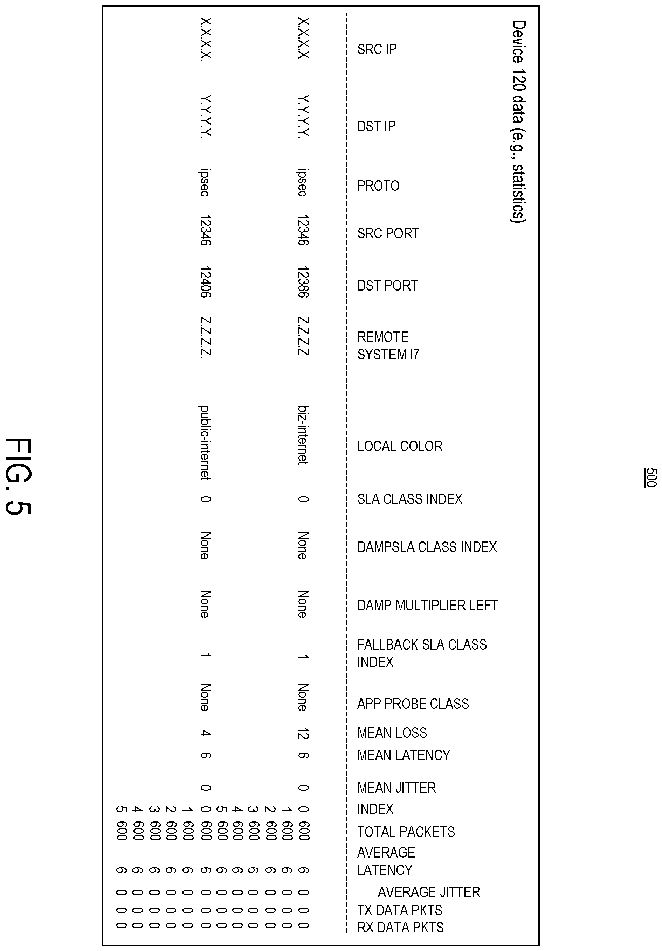

FIG. 5 illustrates an example 500 of a table of an application route statistics (e.g., appRouteStatisticsTable) of a network device 120 of SD-WAN 102 that can be provided through BFD session data 114 or flow metrics (e.g., flow data) 116. Example 500 can include source IP address, destination IP address, protocol information (e.g., protocol name), source port, destination port, remote system IP address, local color (e.g., biz internet or public internet), SLA class index, damp SLA class index, damp multiplier left, fallback SLA class index, APP probe class, mean loss, mean latency, mean jitter, index, total packets, average latency, average jitter, transmitted data packets or received data packets.

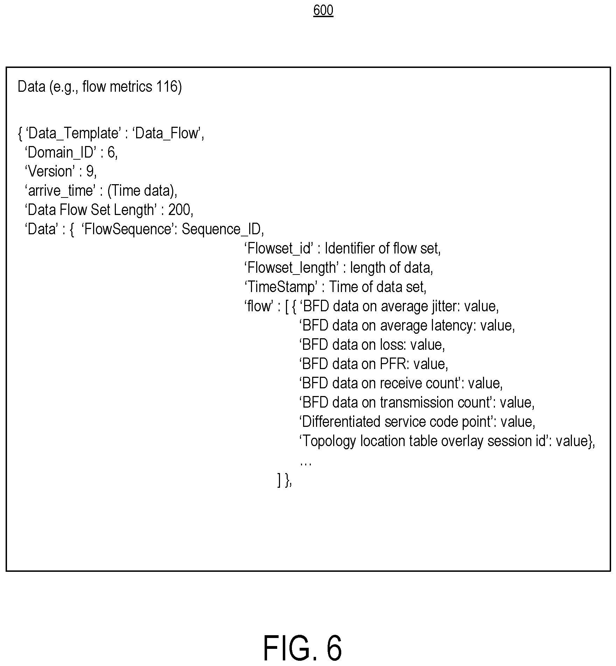

FIG. 6 illustrates an example 600 of data of a network infrastructure state and its performance, including, for example flow metrics 116 data or BFD session data. Data of example 600 can include information on arrival time of network traffic, length of network traffic, flow sequence, flow-set length, a time stamp, a jitter data, average latency, network packet loss data, or any other information pertaining to a session or one or more network nodes. Data of example 600 can be expressed in terms of IPFIX or BFD data points and can be provided as a data structure comprising the given set of parameters and values on network performance (e.g., average jitter value, average latency, BFD data on loss, BFD data on prefix independent convergence, transmission and receive count values or any other network parameters.

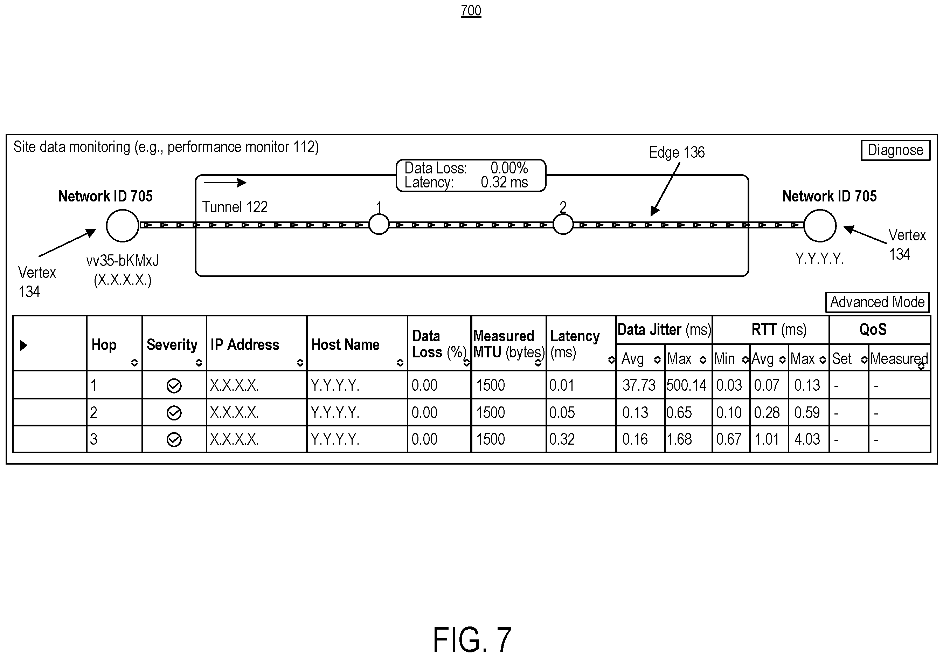

FIG. 7 illustrates an example 700 of a screen shot of a graphical user interface showing data from a performance monitor 112 monitoring a site 110. Example 700 can show data on a network ID of a particular tunnel 122, along with the source and destination IP addresses. For instance, a graphical user interface can illustrate vertices 134 identified by their IP addresses and an edge 136 denoting the tunnel 122 between the vertices 134. Tunnel 122 can have its particular latency and data loss percentage identified. Example 700 screenshot can include information aggregated and converted from the BFD and flow data, such as hop number, IP addresses, host names, data loss information, measured maximum transmission unit of data (MTU), latency, data jitter (e.g., average and maximum), round trip time (e.g., in milliseconds) that is minimum, average and maximum, as well as Quality of Service (QoS) information for the tunnel 122. This data can be transmitted to the DPS 130, for processing and use by the metric aggregator 140, for example, responsive to a determination that BFD session data 114 or flow metrics 116 are unavailable.

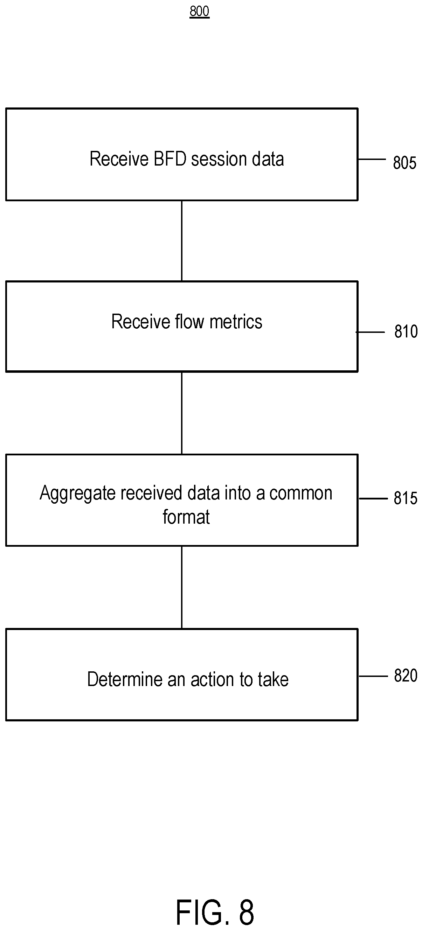

FIG. 8 illustrates an example flow diagram of a method 800 for SD-WAN management within API rate limits utilizing network protocol data. Method 800 can include acts 805-820, which can be performed by the system 100 having devices utilizing computing systems 200 and implementing functionalities, such as those described in connection with figures 1-7. At act 805, a data processing system can receive BFD session data. At act 810, the data processing system can receive flow metrics. At act 815, the data processing system can aggregate received data into a common format. At act 820, the data processing system can determine an action to take.

At act 805, a DPS can receive BFD session data. The method can include one or more processors of the DPS that are coupled with memory receiving, responsive to bidirectional forwarding detection (BFD) monitoring, BFD session data in a first format. The BFD session data can correspond to, or indicate information of, a tunnel between devices of a software defined wide area network (SD-WAN). For instance, a metric aggregator of a DPS can monitor network traffic from the SD-WAN (e.g., SD-WAN controller or SD-WAN sites) including for example BFD or other protocols indicative of faults or state of the SD-WAN. The BFD session data can be in a BFD format or format of any other protocol, such as internet protocol service level agreements (IS SLA), netFlow, SNMP, message logging (syslog), ping and traceroute, pathping, IP flow information export (IPFIX), SysFlow or Wireshark.

The method can include the one or more processors identifying an API rate limit for API calls to the SD-WAN. The rate limit can include a number of API calls allowed (e.g., 10 API calls) within a predetermined time period (e.g., 1 hour). The one or more processors of the DPS can utilize the API management function to send one or more API calls for information on the topology (e.g., arrangement) of the SD-WAN, where the number of the one or more API calls is kept within (e.g., less than or equal to) the API rate limit. The one or more processors of the DPS can receive the data on the topology of the SD-WAN responsive to the plurality of API calls made within the API rate limit.

The method can include the one or more processors identifying a timer for polling of the BFD session data and the flow metrics. The timer can trigger one or more API calls for one or more data on the topology of the SD-WAN. The timer can trigger one or more requests for BFD session data or flow data (e.g., IPFIX data). In an example, a different timer is used for the API calls, BFD session data and the flow metrics data. In an example, the same timer is used for the flow metrics (e.g., flow data) and the BFD session data. The one or more processors can receive the BFD session data and the flow metrics responsive to the one or more requests transmitted according to the timer.

The method can include the one or more processors receiving the BFD session data (or any other network data) identifying a fault of the tunnel. The data can be received from a SD-WAN controller (e.g., performance monitor of the SD-WAN controller) or from one or more SD-WAN sites (e.g., site performance monitors). The received data can identify or indicate a fault, an error, an issue or a violation of a threshold of the performance of any element of the SD-WAN (e.g., a router, and endpoint device, a tunnel, a policy or a rule). The BFD session data can identify, for example that an application transmitting data over a tunnel has experienced an error or is performing below a particular threshold. For example, the data can indicate that an application transmitting data over a tunnel is operating below a particular transmission rate threshold or is having a delay or a jitter that is greater than, an acceptable range. For example, the data can indicate that the tunnel is faulty, is down or has otherwise experienced an error in performance or operation.

At act 810, the data processing system can receive flow metrics. The method can include the one or more processors of the DPS receiving flow metrics (e.g., flow data) in a second format. The flow metrics or flow data can be received responsive to internet protocol flow information export (IPFIX) monitoring. The flow metrics can include data corresponding to one or more flows of a network traffic traversing the tunnel. The flow metrics can be received via IPFIX, SNMP, BFD, sFlow or one or more streaming telemetry protocols, such as gRPC (remote procedure calls. The data can be received from a SD-WAN controller (e.g., performance monitor of the SD-WAN controller) or from one or more SD-WAN sites (e.g., site performance monitors).

Flow metrics or flow data can include any data on the flow of network traffic between two elements of the SD-WAN. For example, flow metrics can include data on any one or more of a: jitter, latency, delay, transmission rate, receiving rate, data loss, rate of loss, QoS or any other information about the data transmission. Flow metrics can include average values (e.g., of jitter, delay or loss) or can include measured values, or minimum or maximum values. Flow metrics can provide any information on the flow of data within a particular tunnel, connection or a session between two elements of the SD-WAN.

At act 815, the data processing system can aggregate received data into a common format. The method can include the one or more processors of the DPS aggregating the BFD session data and the flow metrics into aggregated metrics according to a third format. For example, DPS can utilize a format converter to convert the BFD session data from the format of the protocol that provided the BFD session data (e.g., BFD format) into a format of the SD-WAN model (e.g., metrics aggregator format). The format converter can convert the flow metrics from the format of the protocol that provided the flow metrics data (e.g., IPFIX format) into the format of the SD-WAN model.

The metric aggregator can aggregate the combined and formatted (e.g., normalized) data into a common format of the SD-WAN model. The metric aggregator can generate the SD-WAN model to represent the arrangement (e.g., topology) of the SD-WAN and the state (e.g., operation or performance) of each of the nodes or elements of the SD-WAN according to the common network of the SD-WAN model. Upon receiving the topology data of the SD-WAN (e.g., responsive to the API calls), the metrics aggregator can aggregate the BFD session data and the flow metrics for the topology of the SD-WAN. The data that can be aggregated by the metric aggregator can include, for example, IP addresses of the devices or endpoints (e.g., IP addresses of routers), source and destination IP addresses, site identifiers, source TLOC colors (e.g., business-internet or public-internet), encapsulation (ENCAP) data, detection multiplier, transmission interval, uptime. The aggregated data can include, for example, metrics (e.g., measurements of the system) corresponding to, or indicative of, jitter, delay, latency, transmission rates, receiving rates and other information corresponding to flow of data through the tunnels of the SD-WAN.

The method can include the one or more processors aggregating the BFD session data and the flow metrics according to a graph data model of the SD-WAN. The graph data model can include vertices arranged according to a topology of the SD-WAN and edges corresponding to relations between the vertices according to the third format. The one or more processors can determine, based at least on the BFD session data, a state of the tunnel. The method can include identifying, by the one or more processors, based at least on the state of the tunnel, that a performance of the tunnel, a connection, a session, a network device, a policy or a QoS configuration is below a threshold of a service level agreement (SLA). For example, the metric aggregator can determine, using the updated BFD session data and the flow metrics in the SD-WAN model of the SD-WAN that one or more of: latency, delay, data loss, transmission rates or other metrics of the performance of an element of the SD-WAN is beyond (e.g., below or above) an acceptable threshold range.

The one or more processors can determine, using a graph data model of the aggregated metrics, a performance of an application of a device of the SD-WAN. For instance, using the flow metrics or the BFD session data, the metric aggregator can determine that an application using a particular tunnel or operating on a particular endpoint device is faulty or performs below an acceptable performance range or threshold. The application can communicate the network traffic via the tunnel or be deployed on a particular server or a computing device (e.g., a user or a client device). The method can include detecting, by the one or more processors, based at least on the performance, a fault corresponding to the application, such as an application crash, a connection error or a tunnel fault.

At act 820, the data processing system can determine an action to take. The method can include the one or more processors determining an action to take based at least on the aggregated metrics in the third format. The action can include generating and sending a transmission of at least one of an alarm or a notification indicative of a fault of the tunnel identified by a model of the SD-WAN based at least on the aggregated metrics. The action can include generating and sending a transmission of an alarm or a notification of a fault of an application, an endpoint device or any other element of the SD-WAN. The action can include sending of an alert indicating that a tunnel, an application or an element of SD-WAN performs below a particular threshold range (e.g., delay, latency, transmission rate or data loss rate are below outside of an acceptable threshold range).

The method can include transmitting, by the one or more processors, according to the action to indicate an SLA violation, an alert indicative of the performance of the tunnel. For instance, an alert, a notification or an indication can be transmitted by the notification function to a user device, a client of the SD-WAN, an SD-WAN controller or a manager of the SD-WAN.

The method can include determining, by the one or more processors, that a count of API calls to a controller of the SD-WAN within a time period is below an API limit for the time period. The one or more processors can send, responsive to a detected fault and the determination that the count of the API calls is below an API limit rate, an API call to the controller of the SD-WAN. The API call can request information (e.g., update) on the tunnel identified as having the fault or any topology update of the SD-WAN. The one or more processors can determine the action to transmit an alert indicative of the fault corresponding to the application.

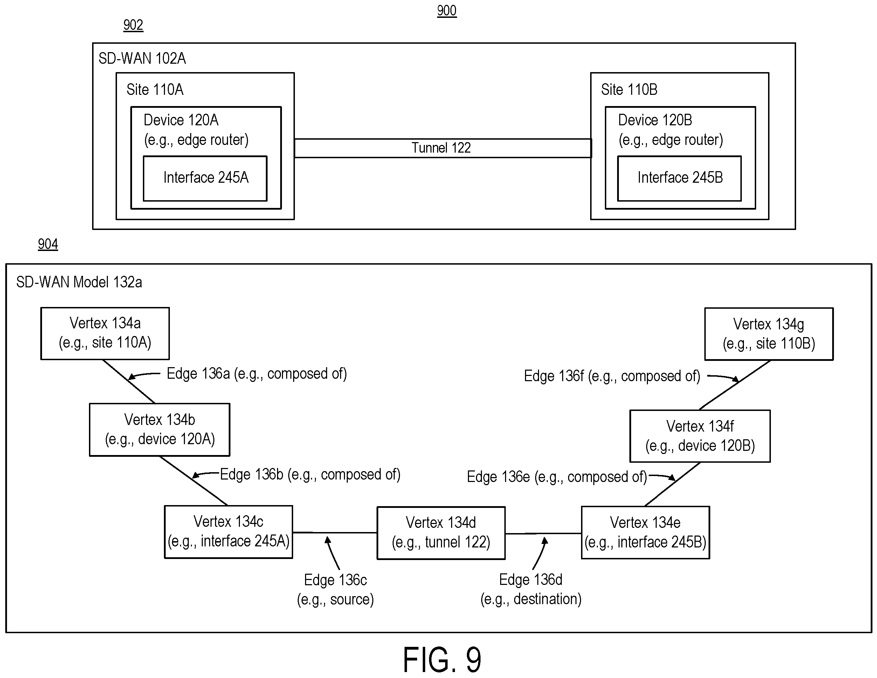

FIG. 9 illustrates example 900 including a view 902 of a diagram of an infrastructure of an SD-WAN 102A and a view 904 of a representation of a SD-WAN model 132a representing the infrastructure of the SD-WAN 102A using vertices 134 and edges 136. View 902 can include an example SD-WAN 102 having two sites 100: a site 110A and a site 110B. Site 110A can include a device 120A (e.g., a first edge router) that can include a network interface 245A to communicate with a device 120B (e.g., a second edge router) of site 110B via a network interface 245B of the device B and through a tunnel 122 established between the site 110A and site 110B.

SD-WAN model 132a of view 904 can include a graph model representing the network infrastructure of SD-WAN 102a of view 902 using vertices 134 corresponding to network nodes of the SD-WAN 102 and edges 136 indicative of relations between the vertices 134. SD-WAN model 132 can include a vertex 134a corresponding to site 110A, a vertex 134b corresponding to device 120A (e.g., a first edge router), a vertex 134c corresponding to a network interface 245A and a vertex 134d corresponding to a tunnel 122 between the sites 110A and 110B. SD-WAN model 132 can include a vertex 134e corresponding to the network interface 245B, a vertex 134f corresponding to device 120B (e.g., the second edge router) and a vertex 134g corresponding to the site 110B.

SD-WAN model 134a can include a plurality of edges 136a-136f indicating, describing or marking the relations between the vertices 134a-134g. Edge 136a between vertices 134a and 134b can indicate that site 110A includes, relates to or is composed of device 120A of vertex 134b. Edge 136b between vertices 134b and 134c can indicate that device 120A of vertex 134b includes, relates to or is composed of interface 245A of vertex 134c. Edge 136c between vertices 134c and 134d can indicate that interface 245A is, or corresponds to, a source of the tunnel 122 of vertex 134d. Edge 136d between vertices 134d and 134e can indicate that interface 245B of vertex 134e is, or corresponds to, a destination of the tunnel 122 of the vertex 134d. Edge 136e between vertices 134e and 134f can indicate that device 120B of vertex 134f includes, relates to or is composed of interface 245B of vertex 134e. Edge 136f between vertices 134f and 134g can indicate that site 110A of vertex 134g includes, relates to or is composed of device 120B of vertex 134f.

As edges 136 can include various information, including performance parameters, data or characteristics, SD-WAN model 132a can represent, via vertices 134 and edges 136, the infrastructure, the operation and the performance of the SD-WAN 102a, using the updated BFD session data 114 and flow metrics 116 to continuously update the SD-WAN model 132a and monitor the SD-WAN 102a infrastructure, its state, faults and performance. Using NetOps 150, DPS 130 can utilize any faults or performance issues identified using the SD-WAN 102a to take corrective action, such as using FMS 156 to address or correct any infrastructure faults or using PMS 158 to correct any performance issues. References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first packet and a second packet) temporally or according to a sequence, although in some cases, these entities can include such a relationship. Nor do these terms limit the number of possible entities (e.g., transmitters and receivers) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system, comprising:
one or more processors, coupled with memory configured to:
receive, responsive to monitoring a first network protocol data configured to indicate a failure of a communication link, network fault data in a first format, the network fault data corresponding to a tunnel between devices of a software defined wide area network (SD-WAN);
receive, responsive to monitoring a second network protocol data configured to indicate metrics of flow of network traffic, flow metrics in a second format, the flow metrics corresponding to one or more flows of a network traffic traversing the tunnel;
aggregate the BFD session data and the flow metrics into aggregated metrics according to a third format; and
determine an action to take based at least on the aggregated metrics in the third format.

2. The system of claim 1, comprising the one or more processors configured to:
identify a timer for polling the network fault data; and
receive the network fault data and the flow metrics responsive to one or more
requests transmitted according to the timer,
and/or comprising the one or more processors configured to:
identify an API rate limit for API calls to the SD-WAN;
receive data on topology of the SD-WAN responsive to a plurality of API calls within the API rate limit; and
aggregate the network fault data and the flow metrics for the topology of the SD-WAN.

3. The system of claim 1 or 2, comprising the one or more processors configured to:
receive the network fault data identifying a fault of the tunnel using bidirectional forwarding detection (BFD) protocol;
determine that a count of API calls to a controller of the SD-WAN within a time period is below an API limit for the time period; and
send, responsive to the fault and the determination, an API call to the controller of the SD-WAN, the call requesting information on the tunnel.

4. The system of any of claims 1 to 3, comprising the one or more processors configured to:
aggregate the network fault data and the flow metrics according to a graph data model of the SD-WAN, wherein the graph data model includes vertices arranged according to a topology of the SD-WAN and edges corresponding to relations between the vertices according to the third format,
in particular, wherein the flow metrics are received using internet protocol flow information export (IPFIX) protocol, the flow metrics indicative of at least one of: jitter, latency, transmission rate, receiving rate, loss and delay and the action includes a transmission of at least one of an alarm or a notification indicative of a fault of the tunnel identified by a model of the SD-WAN based at least on the aggregated metrics.

5. The system of any of claims 1 to 4, comprising the one or more processors configured to:
determine, based at least on the network fault data, a state of the tunnel;
identify, based at least on the state of the tunnel, that a performance of the tunnel is below a threshold of a service level agreement (SLA); and
transmit, according to the action to indicate an SLA violation, an alert indicative of the performance of the tunnel.

6. The system of any of claims 1 to 5, comprising the one or more processors configured to:
determine, using a graph data model of the aggregated metrics, a performance of an application of a device of the SD-WAN, the application communicating the network traffic via the tunnel;
detect, based at least on the performance, a fault corresponding to the application; and
determine the action to transmit an alert indicative of the fault corresponding to the application.

7. A method, comprising:
receiving, by one or more processors coupled with memory, responsive to monitoring a first network protocol data configured to indicate a failure of a communication link, network fault data in a first format, the network fault data corresponding to a tunnel between devices of a software defined wide area network (SD-WAN);
receiving, by the one or more processors, responsive to monitoring a second network protocol data configured to indicate metrics of flow of network traffic, flow metrics in a second format, the flow metrics corresponding to one or more flows of a network traffic traversing the tunnel;
aggregating, by the one or more processors, the network fault data and the flow metrics into aggregated metrics according to a third format; and
determining, by the one or more processors, an action to take based at least on the aggregated metrics in the third format.

8. The method of claim 7, comprising:
identifying, by the one or more processors, a timer for polling the network fault data; and
receiving, by the one or more processors, the network fault data and the flow
metrics responsive to one or more requests transmitted according to the timer, and/or the method comprising:
identifying, by the one or more processors, an API rate limit for API calls to the SD-WAN;
receiving, by the one or more processors, data on topology of the SD-WAN responsive to a plurality of API calls within the API rate limit; and
aggregating, by the one or more processors, the network fault data and the flow metrics for the topology of the SD-WAN.

9. The method of claim 7 or 8, comprising:
receiving, by the one or more processors, the network fault data identifying a fault of the tunnel using bidirectional forwarding detection (BFD) protocol; and
determining, by the one or more processors, that a count of API calls to a controller of the SD-WAN within a time period is below an API limit for the time period; and
sending, by the one or more processors, responsive to the fault and the determination, an API call to the controller of the SD-WAN, the call requesting information on the tunnel.

10. The method of any of claims 7 to 9, comprising:
aggregating, by the one or more processors, the network fault data and the flow metrics according to a graph data model of the SD-WAN, wherein the graph data model includes vertices arranged according to a topology of the SD-WAN and edges corresponding to relations between the vertices according to the third format,
in particular, wherein the flow metrics are received using internet protocol flow information export (IPFIX) protocol, the flow metrics include data on at least one of: jitter, latency, transmission rate, receiving rate, loss and delay and the action includes a transmission of at least one of an alarm or a notification indicative of a fault of the tunnel identified by a model of the SD-WAN based at least on the aggregated metrics.

11. The method of any of claims 7 to 10, comprising:
determining, by the one or more processors, based at least on the network fault data, a state of the tunnel;
identifying, by the one or more processors, based at least on the state of the tunnel, that a performance of the tunnel is below a threshold of a service level agreement (SLA); and
transmitting, by the one or more processors, according to the action to indicate an SLA violation, an alert indicative of the performance of the tunnel.

12. The method of any of claims 7 to 11, comprising:
determining, by the one or more processors, using a graph data model of the aggregated metrics, a performance of an application of a device of the SD-WAN, the application communicating the network traffic via the tunnel;
detecting, by the one or more processors, based at least on the performance, a fault corresponding to the application; and
determining, by the one or more processors, the action to transmit an alert indicative of the fault corresponding to the application.

13. A non-transitory computer-readable medium storing instructions that, when executed by at least one processor, cause the at least one processor to:
receive, responsive to monitoring a first network protocol data configured to indicate a failure of a communication link, network fault data in a first format, the network fault data corresponding to a tunnel between devices of a software defined wide area network (SD-WAN);
receive, responsive to monitoring a second network protocol data configured to indicate metrics of flow of network traffic, flow metrics in a second format, the flow metrics corresponding to one or more flows of a network traffic traversing the tunnel;
aggregate the network fault data and the flow metrics into aggregated metrics according to a third format; and
determine an action to take based at least on the aggregated metrics in the third format.

14. The non-transitory computer-readable medium of claim 13, wherein the instructions cause the at least one processor to:
identify a timer for polling the network fault data; and
receive the network fault data using bidirectional forwarding detection (BFD) protocol and the flow metrics using internet protocol flow information export
(IPFIX),
and/or wherein the instructions further cause the at least one processor to:
identify an API rate limit for API calls to the SD-WAN;
receive data on topology of the SD-WAN responsive to a plurality of API calls within the API rate limit; and
aggregate the network fault data and the flow metrics for the topology of the SD-WAN.

15. The non-transitory computer-readable medium of claim 13 or 14, wherein the instructions cause the at least one processor to:
receive the network fault data identifying a fault of the tunnel using bidirectional forwarding detection (BFD) protocol;
determine that a count of API calls to a controller of the SD-WAN within a time period is below an API limit for the time period; and
send, responsive to the fault and the determination, an API call to the controller of the SD-WAN, the call requesting information on the tunnel.
